# EUROPÄISCHE PATENTANMELDUNG

(11) **EP 4 589 052 A1**
(43) Veröffentlichungstag der Anmeldung: **23.07.2025**
(21) Anmeldenummer: 25152739.6
(22) Anmeldetag: 20.01.2025
(51) Int. Cl.: C25B 9/75, C25B 9/77, H01M 8/0297, H01M 8/2404

(54) **VERFAHREN UND VORRICHTUNG ZUM HERSTELLEN EINER GESTAPELTEN ANORDNUNG VON EINZELZELLEN FÜR BRENNSTOFFZELLEN- ODER ELEKTROLYSEUR-STAPEL**

(30) Priorität: 19.01.2024 DE 102024101613
(71) Anmelder: Aumann Limbach-Oberfrohna GmbH, 09212 Limbach-Oberfrohna (DE)
(72) Erfinder: WÜNSCHE, Sören, Hartmannsdorf (DE)
(74) Vertreter: Bittner, Thomas L.

(57) **Zusammenfassung**

Die Erfindung betrifft ein Verfahren und eine Vorrichtung zum Herstellen einer gestapelten Anordnung von Einzelzellen für Brennstoffzellen- oder Elektrolyseur-Stapel. Beim Verfahren ist Folgendes vorgesehen: Bereitstellen einer Plattenanordnung (10) mit einem ungetrennten Plattenabschnitt für eine Bipolarplatte einer Einzelzelle, wobei in der Plattenanordnung (10) Lagen (4, 8) wenigstens eines Plattenmaterials stoffschlüssig miteinander gefügt sind; Bereitstellen eines Membranmaterials (18) in einer Membran-Elektrolyt-Anordnung für eine Membran der Einzelzelle; Ausbilden eines Stapels (17) mit der Plattenanordnung (10) und dem Membranmaterial (18), derart, dass der ungetrennt Plattenabschnitt mit dem Membranmaterial (18) in der Membran-Elektrolyt-Anordnung flächig überlappt; Zuführen des Stapels (17) zu einer Trenneinrichtung (16); mittels Trennen des Stapels (17) in der Trenneinrichtung (16), Herstellen einer ersten Einzelzelle mit dem eine erste Bipolarplatte bildenden ungetrennten Plattenabschnitt und einem eine erste Membran-Elektrolyt-Anordnung bildenden Abschnitt des Membranmaterials (18), derart, dass für die erste Einzelzelle der ungetrennte Plattenabschnitt zusammen mit dem zugeordneten Abschnitt des Membranmaterials (18) vom Stapel (17) getrennt wird; und Anordnen der ersten Einzelzelle in einer ersten gestapelten Anordnung (1.1) für einen ersten Brennstoffzellen- oder Elektrolyseur-Stapel, wobei die erste Einzelzelle mittels einer von der Trenneinrichtung (16) beim Trennen des Stapels (17) beaufschlagten Auswurfbewegung in der ersten gestapelten Anordnung (1.1) angeordnet wird.

## Beschreibung

Die Erfindung betrifft ein Verfahren und eine Vorrichtung zum Herstellen einer gestapelten Anordnung von Einzelzellen für Brennstoffzellen- oder Elektrolyseur-Stapel.

### Hintergrund

Solche Verfahren und Vorrichtungen werden genutzt, um Einzelzellen als integrierte Komponenten in gestapelten Anordnungen für Brennstoffzellen- oder Elektrolyseur-Stapel einzubringen und anzuordnen. Die Einzelzelle wird üblicherweise gebildet von einer Membran-Elektrolyt-Einheit oder Membran-Elektrolyt-Anordnung ("Membrane-Elektrolyte-Assembly"), einer Bipolarplatte sowie wahlweise einer Dichtung, die zum Beispiel getrennt oder separat einbringbar ist. Die Membran-Elektrolyt-Einheit weist häufig alle Komponenten der Einzelzelle auf, außer der Bipolarplatte.

Die Biopolarplatte hat in der gestapelten Anordnung vor allem die Aufgabe, die Anode einer Zelle oder Einheit mit der Kathode der benachbarten Zelle oder Einheit, also die Elektroden physikalisch und elektrisch leitend zu verbinden. Daneben ist die Bipolarplatte dafür zuständig, Reaktionsgase in eine Reaktionszone zu leiten. Hierzu weisen die Bipolarplatten üblicherweise eine Plattentopologie auf, mit der insbesondere Strömungsprofile (Flow-Field) bereitgestellt sind, durch die auf einer Plattenseite zum Wasserstoff strömt und auf der anderen Seite zum Beispiel Luft zugeführt wird. Die Bipolarplatten dienen einer Ausführungsform auch zum Abführen bei der Elektrolyse entstehendem Wasserdampf sowie zum Abgeben von thermischer und elektrischer Energie. Als Plattenmaterial können für die Bipolarplatten insbesondere Metall, Graphit oder Komposit-Materialien zum Einsatz kommen.

Die Einzelzellen in gestapelter Anordnung stellen eine Vielzahl von Membran-Elektroden-Einheiten bereit, welche einen Stapel oder Stack bilden. Die elektrischen Leistungen der Membran-Elektroden-Einheiten im Stapel addieren sich, wobei zur Energieerzeugung in den Brennstoffzellen- oder dem Elektrolyseur-Stapel die Elektrolyse genutzt wird.

In Fahrzeugen werden zum Erzeugen der elektrischen Energie regelmäßig mehrere gestapelte Anordnungen von Einzelzellen (Stapel oder Stack) verwendet, die jeweils mehrere hundert solcher Einheiten umfassen können. Dieses bedeutet, dass bei der Herstellung der gestapelten Anordnungen für Brennstoffzellen- oder Elektrolyseur-Stapel eine große Zahl von Einzelzellen gefertigt und gestapelt werden muss.

### Zusammenfassung

Aufgabe der Erfindung ist es, ein Verfahren und eine Vorrichtung zum Herstellen einer gestapelten Anordnung von Einzelzellen für Brennstoffzellen- oder Elektrolyseur-Stapel anzugeben, mit denen eine Fertigung zeiteffizient und mit möglichst hoher Fertigungsrate ermöglicht ist.

Zur Lösung sind ein Verfahren und eine Vorrichtung zum Herstellen einer gestapelten Anordnung von Einzelzellen für Brennstoffzellen- oder Elektrolyseur-Stapel nach den unabhängigen Ansprüchen 1 und 13 geschaffen. Ausgestaltungen sind Gegenstand von abhängigen Unteransprüchen.

Nach einem weiteren Aspekt ist ein Verfahren zum Herstellen einer gestapelten Anordnung von Einzelzellen für Brennstoffzellen- oder Elektrolyseur-Stapel geschaffen, wobei Folgendes vorgesehen ist:
- Bereitstellen einer Plattenanordnung mit einem ungetrennten Plattenabschnitt für eine Bipolarplatte einer ersten Einzelzelle, wobei in der Plattenanordnung Lagen wenigstens eines Plattenmaterials stoffschlüssig miteinander gefügt sind;
- Bereitstellen eines Membranmaterials in einer Membran-Elektrolyt-Anordnung für eine Membran der ersten Einzelzelle;
- Ausbilden eines Stapels mit der Plattenanordnung und dem Membranmaterial, derart, dass der ungetrennte Plattenabschnitt mit dem Membranmaterial in der Membran-Elektrolyt-Anordnung flächig überlappt;
- Zuführen des Stapels zu einer Trenneinrichtung;
- mittels Trennen des Stapels in der Trenneinrichtung, Herstellen der ersten Einzelzelle mit dem eine erste Bipolarplatte bildenden ungetrennten Plattenabschnitt und einem eine erste Membran-Elektrolyt-Anordnung bildenden Abschnitt des Membranmaterials, derart, dass für die erste Einzelzelle der ungetrennte Plattenabschnitt zusammen mit dem zugeordneten Abschnitt des Membranmaterials vom Stapel getrennt wird; und
- Anordnen der ersten Einzelzelle in einer ersten gestapelten Anordnung für einen ersten Brennstoffzellen- oder Elektrolyseur-Stapel, wobei die erste Einzelzelle mittels einer von der Trenneinrichtung beim Trennen des Stapels beaufschlagten Auswurfbewegung in der ersten gestapelten Anordnung angeordnet wird.

Nach einem weiteren Aspekt ist eine Vorrichtung zum Herstellen einer gestapelten Anordnung von Einzelzellen für Brennstoffzellen- oder Elektrolyseur-Stapel, wobei die Vorrichtung für Folgendes eingerichtet ist:
- Bereitstellen einer Plattenanordnung mit einem ungetrennten Plattenabschnitt für eine Bipolarplatte einer Einzelzelle, wobei in der Plattenanordnung Lagen wenigstens eines Plattenmaterials stoffschlüssig miteinander gefügt sind;
- Bereitstellen eines Membranmaterials in einer Membran-Elektrolyt-Anordnung für eine Membran der Einzelzelle;
- Ausbilden eines Stapels mit der Plattenanordnung und dem Membranmaterial, derart, dass der ungetrennten Plattenabschnitt mit dem Membranmaterial in der Membran-Elektrolyt-Anordnung jeweils flächig überlappt;
- Zuführen des Stapels zu einer Trenneinrichtung;
- mittels Trennen des Stapels in der Trenneinrichtung, Herstellen einer ersten Einzelzelle mit dem eine erste Bipolarplatte bildenden ungetrennten Plattenabschnitt und einem eine erste Membran-Elektrolyt-Anordnung bildenden Abschnitt des Membranmaterials, derart, dass für die erste Einzelzelle der ungetrennte Plattenabschnitt zusammen mit dem zugeordneten Abschnitt des Membranmaterials vom Stapel getrennt wird; und
- Anordnen der ersten Einzelzelle in einer ersten gestapelten Anordnung für einen ersten Brennstoffzellen- oder Elektrolyseur-Stapel, wobei die erste Einzelzelle mittels einer von der Trenneinrichtung beim Trennen des Stapels beaufschlagten Auswurfbewegung in der ersten gestapelten Anordnung angeordnet wird.

Mit Hilfe der vorgeschlagenen Technologie ist es ermöglicht, gestapelte Anordnungen von Einzelzellen bei der Fertigung von Brennstoffzellen- oder Elektrolyseur-Stapeln in großer Stückzahl und in zeitlicher Hinsicht effizient herzustellen. Die für die Herstellung einer gestapelten Anordnung jeweils beim Trennen des Stapels in der Trenneinrichtung nacheinander hergestellten Einzelzellen gelangen direkt in die gestapelte Anordnung, fallen in diese zum Beispiel hinein, was eine Fertigung der gestapelten Anordnung mit hoher Taktrate unterstützt.

In einem Beispiel werden mit dem Verfahren oder der Vorrichtung jeweils Einzelzellen für mehrere gestapelte Anordnungen hergestellt.

Unterschiedliche Membranmaterialien können beim Bereitstellen des Membranmaterials in der Membran-Elektrolyt-Anordnung für die Membrane der Einzelzelle verwendet werden. Verschiedene Membran-Elektrolyt-Anordnungen sind in unterschiedlichen Ausgestaltungen als solche bekannt. Hierzu gehören beispielsweise drei-, fünf- und sieben-lagige Membranmaterialien oder Membranmaterialien mit einer noch höheren Anzahl von Lagen. Hierbei kann vorgesehen sein, bei Verwendung von Membranmaterial mit geringer Lagenzahl, weitere funktionelle Lagen in Form separaten Lagen zuzuführen, so dass diese im Herstellungsprozess dann mit dem Membranmaterial mit geringer Lagenzahl kombiniert (gestapelt) werden.

Unterschiedliche Plattenmaterialien, die als solche in verschiedenen Ausgestaltungen an sich bekannt sind, können für die Lagen der Plattenanordnung zum Einsatz kommen. Hierzu gehören beispielsweise Plattenlagen aus Graphit, (beschichtetem) Metall, Graphit-Polymer-Compound oder Keramik.

In einer Ausgestaltung kann vorgesehen sein, dass die Plattenanordnung mit dem ungetrennten Plattenabschnitt für die Bipolarplatte beim Bereitstellen im Bereich des ungetrennten Plattenabschnitts mindestens einen Arbeitsmedienzugang für die Bipolarplatte aufweist, welcher mittels Umformen, Schneiden und / oder Stanzen gebildet ist. Im Fall der Plattenanordnung mit mehreren ungetrennten Plattenabschnitten können diese mit jeweils mindestens einem Arbeitsmedienzugang gebildet sein.

Bei dem Verfahren kann weiterhin Folgendes vorgesehen sein: Bereitstellen der Plattenanordnung mit weiteren ungetrennten Plattenabschnitten für Bipolarplatten von weiteren Einzelzellen; mittels Trennen des Stapels in der Trenneinrichtung, Herstellen einer zweiten Einzelzelle mit einem eine zweite Bipolarplatte bildenden Plattenabschnitt der weiteren ungetrennten Plattenabschnitte und einem eine zweite Membran-Elektrolyt-Anordnung bildenden Abschnitt des Membranmaterials, derart, dass für die erste und die zweite Einzelzelle der jeweilige ungetrennte Plattenabschnitt zusammen mit dem jeweils zugeordneten Abschnitt des Membranmaterials vom Stapel getrennt werden; und Anordnen der zweiten Einzelzelle in einer getrennt von der ersten gestapelten Anordnung gebildeten, zweiten gestapelten Anordnung für einen zweiten Brennstoffzellen- oder Elektrolyseur-Stapel, wobei die zweite Einzelzelle mittels der von der Trenneinrichtung beim Trennen des Stapels beaufschlagten Auswurfbewegung in der zweiten gestapelten Anordnung angeordnet wird.

Die erste und die zweite Einzelzelle können beim Trennen des Stapels in der Trenneinrichtung in einem gemeinsamen Trennarbeitsschritt, insbesondere zeitgleich (simultan) hergestellt werden. Mit Hilfe des gleichzeitigen Trennens und einer folgenden im Wesentlichen zeitgleichen Zuführung der mehreren Einzelzellen zur jeweiligen gestapelten Anordnung kann die Taktrate bei der Fertigung weiter optimiert werden.

Die erste und / oder die zweite Einzelzelle können, infolge der beaufschlagten Auswurfbewegung, mittels einer im Wesentlichen freien Fallbewegung in die erste / zweite gestapelte Anordnung gelangen. Eine im Wesentlichen freie Fallbewegung unterstützt ein in zeitlicher Hinsicht möglichst schnelles Anordnen der Einzelzelle(n) in der jeweiligen gestapelten Anordnung nach dem Trennvorgang. Alternativ kann ein geführter Bewegungsabschnitt Teil der Auswurfbewegung sein, in welchem die jeweilige Einzelzelle auf ihrem Weg zum Stapel hin geführt wird, zum Beispiel entlang einer Rampe oder Schräge. Eine Kombination von freier Fallbewegung und geführter Bewegung kann vorgesehen sein. Die Auswurfbewegung vom Trennen zum Anordnen im Stapel hin kann in einem Beispiel im Wesentlichen entlang einer vertikale Bewegungsrichtung erfolgen. Wahlweise kann ein Bewegungsabschnitt schräg zur Vertikalrichtung verlaufen.

Der Stapel kann zum Trennen in der Trenneinrichtung derart angeordnet werden, dass die erste gestapelte Anordnung für den ersten Brennstoffzellen- oder Elektrolyseur-Stapel unterhalb des die erste Bipolarplatte bildenden ungetrennten Plattenabschnitts und diesem gegenüberliegend und / oder die zweite gestapelte Anordnung für einen zweiten Brennstoffzellenoder Elektrolyseur-Stapel unterhalb des die zweite Bipolarplatte bildenden ungetrennten Plattenabschnitts und diesem gegenüberliegend angeordnet werden. Auf diese Weise kann zum Beispiel ein Abstand oder Weg zwischen dem Ort des Trennens, also dem Ort, an dem die jeweilige Einzelzelle aus dem Stapel getrennt wird, und der zugeordneten gestapelten Anordnung, in welcher die jeweilige Einzelzelle danach anzuordnen ist, möglichst klein oder kurz gestaltet werden, was es in einer Ausführung ermöglicht, die Zeit zwischen dem Trennen und dem Anordnen in der gestapelten Anordnung zu minimieren.

Der Stapel kann in der Trenneinrichtung mittels wenigstens eines Trennverfahrens aus der folgenden Gruppe getrennt werden: Stanzen und Schneiden wie Laserschneiden. Im Sinne der vorliegenden Offenbarung umfassen die mittels der Trenneinrichtung nutzbaren Verfahren insbesondere die Verfahrensgruppe "Zerteilen" mit den Untergruppen Ausschneiden, Lochen, Beschneiden, Abgraten. Stanzen gehört in den Bereich Ausschneiden. Auch umfasst sind Verfahren wie Laserschneiden, die zur Gruppe "Abtragen" gehören, was meint, das beim Prozess formloser Stoff entsteht.

Im Fall der Verwendung einer Stanzeinrichtung kann diese mit mehreren Stanzwerkzeugen gebildet sein, mit denen bei einem Trennvorgang jeweils eine der Einzelzellen aus dem Stapel von Plattenanordnung und Membranmaterial herausgetrennt wird, was für die mehreren Stanzwerkzeuge beispielsweise gleichzeitig ausgeführt werden kann. Ähnlich parallel arbeitende Arbeitswerkzeuge können im Zusammenhang mit den anderen Trennverfahren vorgesehen sein.

Die Plattenanordnung mit dem ungetrennten Plattenabschnitt oder mit dem ungetrennten Plattenabschnitt und den weiteren ungetrennten Plattenabschnitten kann in einem Bandmaterial des wenigstens einen Plattenmaterials ausgebildet werden, welches im Stapel mit dem Membranmaterial gestapelt wird. Das Bandmaterial kann dem Herstellungsprozess von einer Rolle zugeführt werden. Vergleichbar kann das Membranmaterial als Bandmaterial von einer Rolle zugeführt werden.

Der Transport der Plattenanordnung mit den ungetrennten Plattenabschnitten für die mehreren Bipolarplatten durch Stationen des Fertigungs- oder Herstellungsprozesses kann mittels Vorschubs des Bandmaterials durch mehrere Arbeitsstationen bis hin zur Trenneinrichtung ausgeführt werden. Eine dieser Arbeitsstationen ist beispielsweise eine Fügestation mit einer Fügevorrichtung, die eingerichtet ist, die Lagen der Plattenanordnung miteinander zu fügen.

Beim Bereitstellen der Plattenanordnung können die Lagen des wenigstens einen Plattenmaterials mittels wenigstens eines Fügeverfahrens aus der folgenden Gruppe stoffschlüssig miteinander gefügt werden: Kleben und Schweißen wie Elektronenstrahlschweißen und / oder Laserschweißen. Auch andere Schweißverfahren wie zum Beispiel Ultraschallschweißen, Reibschweißen, usw. können einzeln oder in Kombination vorgesehen sein. Außerdem Verfahren wie Verpressen, Prägen (oder Prägepressen), wie sie beispielweise auch bei der Herstellung von Plattenwärmetauschern zum Einsatz kommen.

Beim Fügen zum Herstellen der Plattenanordnung können die Lagen in Form von im Wesentlichen glatten Halbzeugen bereitgestellt und dann gefügt werden, also als im Wesentlichen glatte Platten, die insbesondere keine Plattentopologie und / oder keine Zugänge von Arbeitsmedien aufweisen, welche beim Betrieb von Brennstoffzellen- oder Elektrolyseur-Stapeln zum Einsatz kommen. Die Plattentopologie dient hierbei in der Regel der Medienverteilung (Flow-Field) und optional einer Abdichtung (Dichtkante). Die Medienzuführung kann über Ausschnitte im Plattenmaterial erfolgen. Die Topologie kann in einem Beispiel genutzt werden, um einen definierten Durchbruch zum jeweiligen medienführenden Plattenausschnitt herzustellen.

Beim Fügen der Lagen mittels Schweißen kann vorgesehen sein, die zu fügenden Lagen gemeinsam in gestapelter Anordnung über eine zylindrische Rolle zu führen, um einen möglichst kleinen Spalt, bis hin zum Nullspalt, zwischen den zu fügenden Materialabschnitten der Lagen auszubilden. Das Schweißen kann hierbei zum Beispiel im Bereich eines Kammes der Oberfläche der zylindrischen Rolle und / oder wahlweise in Bereichen benachbart hierzu ausgeführt werden. Die zylindrische Rolle unterstützt eine Wärmeableitung beim Schweißen und ist hierfür beispielweise aus einem Werkstoff mit guter thermischer Leitfähigkeit, zum Beispiel Kupfer.

Die Zuführung eines bereits vorgeprägten oder vorgeformten Bandmaterials (nicht-glatte Halbzeuge) kann alternativ vorgesehen sein, welches dann im Fügeverfahren gefügt wird. Zumindest eines der zu fügenden Halbzeuge, zum Beispiel eine obere und eine untere Halbplatte, weist dann schon eine Plattentopologie auf, welche mittels eines oder mehrerer Umformprozesses wie Walzen, Prägen, Tiefziehen und / oder Außenhochdruckumformen ausbildbar ist.

In einer Ausgestaltung kann vorgesehen sein, die Lagen des wenigstens einen Plattenmaterials vor dem Fügen in einer Vorformstation mittels Vorformen, zum Beispiel mittels Vorstanzen und / oder Herstellen von Ausschnitten, mit mindestens einem Zugang für ein Umform-Medium zu versehen. Dieses ermöglicht es, nach dem Fügen an einer Umformstation zum Umformen mittels Innenhochdruck das Umform-Medium in einem oder mehreren geschlossenen Räumen der Plattenanordnung einzubringen.

Der Arbeitsstation zum Vorformen kann das wenigstens eine Plattenmaterial als Bandmaterial von einer ersten Rolle zugeführt werden. Bandmaterial für eine weitere Lage der Plattenanordnung kann dann von einer weiteren Rolle vor der Fügestation in den Fertigungsprozess eingeführt werden, wobei die Bandmaterialien in der Plattenanordnung gestapelt werden, um dann in der Fügestation das Fügen auszuführen.

Beim Vorformen kann vorgesehen sein, an dem Plattenmaterial Positionsmarkierungen herzustellen, die der Orientierung beim relativen Positionieren der Lagen der Plattenanordnung zueinander und / oder beim relativen Positionieren von Plattenmaterial und Membranmaterial dienen. Alternativ oder ergänzend können Positionsmarkierungen genutzt werden, um das Plattenmaterial und / oder die Plattenanordnung mit den gefügten Lagen in einer mehreren der zu durchlaufenden Arbeitsstationen für den jeweiligen Fertigungsschritt korrekt zu positionieren. Positionsmarkierungen können in unterschiedlicher Form vorgesehen sein und sind als solche in verschiedenen Ausgestaltungen bekannt. Es kommen zum Beispiel einfachste Grundprinzipien wie "Fädelschrägen" oder ähnliches zum Einsatz. Ob diese Schräge Teil der Form im Bandmaterial oder eines die Ausrichtfunktion realisierenden Bauteils der Maschine selbst ist, kann abhängig vom Ausführungsbeispiel variiert werden.

Beim Bereitstellen der Plattenanordnung kann nach dem Fügen der Lagen des wenigstens einen Plattenmaterials im Bereich des ungetrennten Plattenabschnitts oder des ungetrennten Plattenabschnitts und der weiteren ungetrennten Plattenabschnitte mittels Umformen jeweils eine Plattentopologie ausgebildet werden, welche jeweils wenigstens einen Arbeitsmedienzugang für die Bipolarplatte umfasst. Das Umformen zum Ausbilden der jeweiligen Plattentopologie kann unmittelbar nach dem Fügen im nächsten Bearbeitungsschritt oder nach einem oder mehreren weiteren Schritten ausgeführt werden, die zuvor auf das Fügen folgen.

Das Umformen kann mittels Innenhochdruck-Umformen ausgeführt werden. Beim Innenhochdruck-Umformen werden ein oder mehrere in der Plattenanordnung beim Fügen hergestellte Innenräume - über mindestens einen vorher ausgebildeten Umform-Medien-Zugang - mit einem Druckmedium (Umform-Medium) beaufschlagt, um die jeweilige Plattentopologie auszubilden. Das Plattenmaterial wird hierbei gegen eine äußere Werkzeugform gedrückt, die die Plattenanordnung zumindest oben und unten umgibt.

Alternativ können andere Umformverfahren genutzt werden, um die Plattentopologie herzustellen. Wenn zum Beispiel eine Bipolarplatte aus Graphit vorgesehen ist, erweitern sich die nutzbaren Verfahren um spanabhebende Verfahren. Bei alternativ zum Innenhochdruck-Umformen genutzten Verfahren ist dann regelmäßig vor dem Fügen von oberer und unterer Bipolarplatten-Hälfte vorzusehen. Folgende Verfahren können lediglich beispielhaft genannt werden: Prägen, Walzen, Fräsen (insbesondere bei graphitischer Bipolarplatte).

In Verbindung mit dem Innenhochdruck-Umformen kann ergänzend eine Dichtheitsprüfung für die gefügte Plattenanordnung vorgesehen sein, wobei das zur Formgebung genutzte Umform-Medium als Prüfmedium fungieren kann. Alternativ kann ein weiteres Medium der Kavität als Prüf-Medium zugeführt werden. Auch das Versetzen des Formgebenden Mediums mit einem für die Detektion in einem Dichtprüfverfahren geeigneten Medium ist möglich.

Beim Trennen des Stapels kann mindestens eine weitere Einzelzelle mit einem eine weitere Bipolarplatte bildenden Plattenabschnitt der ungetrennten Plattenabschnitte und einem eine weitere Membran-Elektrolyt-Anordnung bildenden Abschnitt des Membranmaterials hergestellt werden. Die weitere Einzelzelle kann in einer weiteren gestapelten Anordnung für einen getrennt von der ersten und der zweiten gestapelten Anordnung gebildeten, weiteren Brennstoffzellen- oder Elektrolyseur-Stapel angeordnet werden, wobei die weitere Einzelzelle mittels der von der Trenneinrichtung beim Trennen des Stapels beaufschlagten Auswurfbewegung in der weiteren gestapelten Anordnung angeordnet wird. Mit Hilfe des Verfahrens kann so eine Vielzahl von gestapelten Anordnungen hergestellt werden, die jeweils einen Brennstoffzellen- oder Elektrolyseur-Stapel bilden. Die Ausgestaltungen des Verfahrens in Verbindung mit der mindestens einen weiteren Einzelzelle können die Ausführungsformen entsprechen, wie sie für die erste und die zweite Einzelzelle erläutert wurde.

Die Plattenanordnung kann mit ungetrennten Plattenabschnitten bereitgestellt werden, von denen ungetrennte Plattenabschnitte nebeneinanderliegend sowohl in einer ersten Richtung wie auch in einer zweiten Richtung angeordnet sind, welche quer zur ersten Richtung verlaufen. In der Plattenanordnung ist so eine flächige Anordnung von ungetrennten Plattenabschnitten bereitgestellt, welche in der Trenneinrichtung zum Beispiel gleichzeitig getrennt werden können. Für die Anordnung von ungetrennten Plattenabschnitten ergibt sich eine Ausdehnung in x- und y-Richtung. Eine Matrixanordnung von ungetrennten Plattenabschnitten kann in der Plattenanordnung vorgesehen sein. Alternativ kann sich die Anordnung von mehreren ungetrennten Plattenabschnitten nur in einer ersten Richtung erstrecken.

In der Trenneinrichtung kann jedem ungetrennten Plattenabschnitt ein separates Trennwerkzeug zugeordnet sein, was ein gleichzeitiges Trennen der ungetrennten Plattenabschnitte aus der Plattenanordnung ermöglicht. Die Anordnung und Richtungsausdehnung der gestapelten Anordnungen, in denen die Einzelzellen aus der Trenneinrichtung zugeführt werden, kann der Anordnung von ungetrennten Plattenabschnitten entsprechen, diese also im Wesentlichen spiegeln.

Die in Verbindung mit dem Verfahren zum Herstellen einer gestapelten Anordnung oder von gestapelten Anordnungen erläuterten Ausgestaltungen können bei der Vorrichtung zum Herstellen gestapelter Anordnungen von Einzelzellen für Brennstoffzellen- oder Elektrolyseur-Stapel entsprechend vorgesehen sein.

In einer Ausgestaltung kann in der Trenneinrichtung Folgendes vorgesehen sein: Die erste gestapelte Anordnung für den ersten Brennstoffzellen- oder Elektrolyseur-Stapel ist unterhalb des die erste Bipolarplatte bildenden ungetrennten Plattenabschnitts und diesem gegenüberliegend angeordnet, und die zweite gestapelte Anordnung für den zweiten Brennstoffzellen-Elektrolyseur-Stapel ist unterhalb des die zweite Bipolarplatte bildenden ungetrennten Plattenabschnitts in diesem gegenüberliegend angeordnet.

Insgesamt kann eine Rolle-zu-Stack / Stapel-Prozess ausgeführt werden, bei dem die von mehreren Rollen zugeführten Bandmaterialen verarbeitet werden, um die gestapelten Anordnungen für Brennstoffzellen- oder Elektrolyseur-Stapel herzustellen. Ein kontinuierlicher Band-Prozess, bei dem die Bandmaterialien kontinuierlich zugeführt und durch die Arbeitsstationen, einschließlich dem Trennen in der Trenneinrichtung und dem Stapeln, verarbeitet werden, kann vorgesehen sein.

Beim Herstellen der Einzelzelle wird zwischen der Plattenanordnung für die Bipolarplatte und der die Membran bereitstellenden Membran-Elektrolyt-Anordnung (Membranmaterial) eine dichte Verbindung ausgebildet. Hierfür kann eine Dichtung vorgesehen sein, die mittels eines Dichtungsmaterials ausbildbar ist. In einem Beispiel wird das Dichtungsmaterial beim Ausbilden des Stapels mit der Plattenanordnung und dem Membranmaterial eingebracht, beispielweise als Rollenmaterial von einer Rolle oder als Stückmaterial. Das Dichtmaterial kann in einem Beispiel von der Membran-Elektrolyt-Anordnung im Membranmaterial umfasst sein. Alternativ oder ergänzend kann zum Ausbilden der Dichtung vorgesehen sein, in einem Arbeitsschritt Dichtmaterial auf die Plattenanordnung und / oder das Membranmaterial aufzutragen, zum Beispiel aufzudrucken, beispielweise mittels Siebdruck.

### Beschreibung von Ausführungsbeispielen

Im Folgenden werden weitere Ausführungsbeispiele unter Bezugnahme auf Figuren einer Zeichnung erläutert. Hierbei zeigen:
- Fig. 1: eine schematische Darstellung einer Vorrichtung zum Herstellen gestapelter Anordnungen von Einzelzellen für Brennstoffzellen- oder Elektrolyseur-Stapel;
- Fig. 2: eine schematische Darstellung einer Trenneinrichtung von der Seite und
- Fig. 3: eine schematische Darstellung einer Trenneinrichtung mit Wechseltisch von oben.

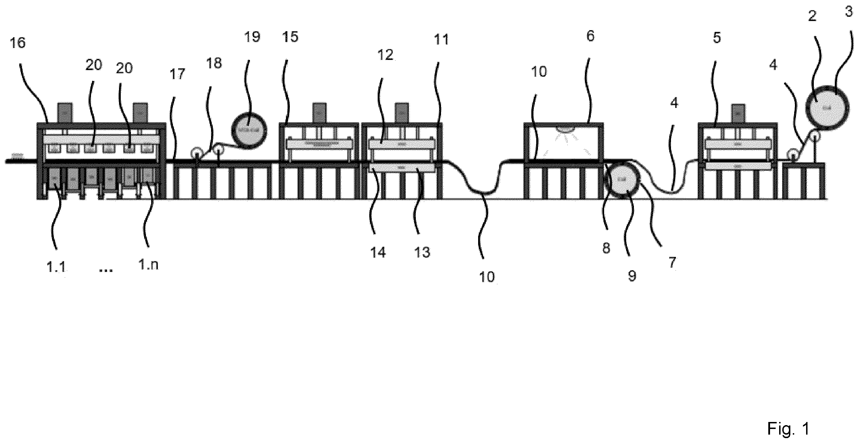

Fig. 1 zeigt eine schematische Darstellung einer Vorrichtung zum Herstellen gestapelter Anordnungen 1.1, ..., 1.n von Einzelzellen für Brennstoffzellen- oder Elektrolyseur-Stapel.

Von einer Rolle 2 wird ein Bandmaterial 3 für eine Plattenlage 4 bereitgestellt und kontinuierlich nachgeführt, beispielsweise ein als Plattenmaterial dienendes Edelstahlblech oder eine hierfür verwendete Metall-Folie. Die Plattenlage 4 wird einer Vorformstation 5 zugeführt, die beispielsweise mit einer Press-, einer Präge- und / oder einer Stanzeinrichtung gebildet ist, welche genutzt wird, um die Plattenlage 4 vorzuformen. In der Vorformstation 5 wird in einer Ausführungsform beispielsweise in der Plattenlage 4 eine Vorformung zum Ausbilden eines Druckmedienzugangs ausgeführt, zum Beispiel mittels Stanzen und / oder Pressen. Auch kann vorgesehen sein, in der Vorformstation 5 oder einer hiervon getrennt gebildeten Markierstation (nicht dargestellt) an der Plattenlage 4 Positionsmarkierungen herzustellen, die im weiteren Fertigungsverfahren beispielsweise dazu genutzt werden, gestapelte Lagen relativ zueinander zu positionieren und / oder die erste Plattenlage 4 und / oder einen Plattenverbund, welche die Plattenlage 4 umfasst, in folgenden Arbeitsstationen korrekt anzuordnen oder zu positionieren.

Das Bandmaterial 3 der Plattenlage 4 wird dann einer Fügeeinrichtung 6 zugeführt. Der Fügeeinrichtung 6 wird (mindestens) ein weiteres Bandmaterial 7 für (mindestens) eine weitere Plattenlage 8 von einer weiteren Rolle 9 ebenfalls zugeführt, derart, dass die Plattenlage 4 und die weitere Plattenlage 8 übereinander angeordnet sind, wobei dieses Stapeln der Plattenlagen 4, 8 vor und / oder in der Fügeeinrichtung ausgeführt werden kann. Die Plattenlagen 4, 8 werden der Fügeeinrichtung 6 als im Wesentlichen glatte Halbzeuge zugeführt, also insbesondere ohne, dass die Plattenlagen 4, 8 eine Plattentopologie für die herzustellenden Bipolarplatten aufweisen.

Die Plattenlagen 4, 8 werden mit Hilfe der Fügeeinrichtung 6 miteinander gefügt, beispielsweise mittels Kleben und / oder Schweißen wie zum Beispiel Elektronenstrahl-Schweißen. Auf diese Weise entsteht eine Plattenanordnung 10, in welcher die Plattenlagen 4, 8, welche aus dem gleichen oder unterschiedlichen Plattenmaterial bestehen, miteinander gefügt sind.

Die Plattenanordnung 10 mit den gefügten Plattenlagen 4, 8 stellt ungetrennte Plattenabschnitte bereit, die über die Fläche der Plattenanordnung 10 verteilt sind. Es kann vorgesehen sein, dass für die ungetrennten Plattenabschnitte ein jeweiliger Druckmedienzugang in der Vorformstation 5 ausgebildet wurde. Alternativ kann ein Druckmedienzugang mehreren ungetrennten Plattenabschnitten gemeinsam zugeordnet sein. Im weiteren Verlauf des Herstellungsverfahrens werden die ungetrennten Plattenabschnitte von der Plattenanordnung 10 getrennt, um jeweils eine Bipolarplatte für eine Einzelzelle zu bilden, was nachfolgend im Einzelnen erläutert wird.

Die Plattenanordnung 10 wird sodann, insbesondere als kontinuierliche Bandanordnung, einer Umformeinrichtung 11 zugeführt, wo die Plattenlagen 4, 8 der Plattenanordnung 10 umgeformt werden, um insbesondere die Plattentopologie für die herzustellenden Bipolarplatten in den Einzelzellen auszubilden. Hierbei kann vorgesehen sein, die ungetrennten Plattenabschnitte mit einer jeweiligen Plattentopologie (für die jeweilige Bipolarplatte) zu versehen.

In der Umformeinrichtung 11 wird die Plattenanordnung 10 zum Beispiel mittels Innenhochdruck-Umformen bearbeitet. Beim Innenhochdruck-Umformen wird über einen oder mehrere Druckmedienzugänge, welche insbesondere zumindest teilweise in der Vorformstation 5 hergestellt wurden, in der Plattenanordnung 10 ein Druckmedium eingespeist, insbesondere in hierin gebildete Innenräume, um die Plattenlage 4 und / oder die weitere Plattenlage 8 gegen eine obere und eine untere Werkzeughälfte 12, 13 eines Umformwerkzeugs 14 zu drücken. Optional kann in diesem Schritt eine Dichtheitsprüfung vorgesehen sein, wobei das zur Formgebung genutzte Umform-Medium als Prüfmedium fungieren kann. Alternativ kann ein weiteres Medium der Kavität als Prüf-Medium zugeführt werden. Auch das Versetzen des Formgebenden Mediums mit einem für die Detektion in einem Dichtprüfverfahren geeigneten Medium ist möglich.

In einer weiteren Umform- oder Formeinrichtung 15 wird die Plattenanordnung 10 ergänzend bearbeitet, insbesondere mittels Stanzen, Pressen und / oder Prägen, zum Beispiel zum Ausbilden oder Weiterbilden einer Mediengalerie, welche insbesondere Arbeitsmedienzugänge in der Plattenanordnung 10 aufweist, die dazu dienen, für die Einzelzellen Zugänge und Abgänge für die Arbeitsmedien bereitzustellen, die dann am Betrieb eines Brennstoffzellen- oder Elektrolyseur-Stapels beteiligt sind. Die Mediengalerie kann zumindest teilweise bereits in der Umformeinrichtung 11 und / oder der Vorformstation 5 ausgebildet werden, wobei eine ergänzende Ausbildung in der weiteren Umform- oder Formeinrichtung 15 vorgesehen sein kann.

Die so bearbeitete Plattenanordnung 10 wird dann einer Trenneinrichtung 16 zugeführt, wobei hierfür ein Stapel 17 mit der Plattenanordnung 10 mit den gestapelten und gefügten Plattenlagen 4, 8 und einem Membranmaterial 18 ausgebildet wird, wobei das Membranmaterial 18 als Bandmaterial von einer weiteren Rolle 19 zugeführt wird. Mit dem Bandmaterial 18 wird eine Membran-Elektrolyt-Anordnung bereitgestellt, um diese dann mit der Bipolarplatte (Plattenabschnitt in Plattenanordnung 10) in den Einzelzellen jeweils zu kombinieren. Alternativ kann das Membranmaterial 18 in Form von Bandmaterial direkt aus einem vorgelagerten Produktionsprozess zugeführt werden, in welchem das Membran-Bandmaterial in mehreren Schritten aus dem jeweiligen Rohmaterial erstellt wird.

In dem Stapel 17 überlappen die ungetrennten Plattenabschnitte der Plattenanordnung 10 mit dem Membranmaterial 18 flächig, so dass über eine Fläche, die sich zum Beispiel in x- und y-Richtung erstreckt, eine matrixartige Anordnung der ungetrennten Plattenabschnitte mit einem jeweils zugeordneten Abschnitt des Membranmaterials, in gestapelter Weise, gebildet ist.

Die Trenneinrichtung 16 weist mehrere Trennwerkzeuge 20 auf, die gleichzeitig betätigt werden können, um aus dem zugeführten Stapel 17 simultan mehrere Einzelzellen zu trennen, so dass diese zum Beispiel aufgrund von freier Fallbewegung in die darunterliegenden gestapelten Anordnungen 1.1, ..., 1.n gelangen. Die freie Fallbewegung folgt zum Beispiel direkt auf den Trennvorgang. Alternativ zur freien Fallbewegung können Führungselemente wie Stangen, Hülsen oder Hohlprofile in x- und y-Richtung zum Ausbilden von geführten Bewegungsabschnitten vorgesehen sein.

Die gestapelten Anordnungen 1.1, ..., 1.n mit den jeweiligen übereinander gestapelten Einzelzellen sind jeweils unterhalb und dort gegenüberliegend einer Position angeordnet, in welcher das zugeordnet Trennwerkzeug 20 die Einzelzelle von dem Stapel 17 trennt, so dass die Einzelzellen bei dem gezeigten Ausführungsbeispiel auf geradem Weg nach unten in die zugeordnete gestapelte Anordnungen 1.1, ..., 1.n gelangen können.

Die Lage der jeweils obersten oder zuletzt eingebrachten Einzelzelle in den gestapelten Anordnungen 1.1, ..., 1.n kann so auf einen Umkehrpunkt (unterer Totpunkt) des Trennwerkzeuges 20 abgestimmt sein, dass die ggf. in einer freier Fallbewegung durch die nächste eingebrachte Einzelzelle zurückgelegte Strecke minimiert oder gänzlich eliminiert wird.

Diese Position der jeweils obersten oder zuletzt eingebrachten Einzelzelle in den gestapelten Anordnungen 1.1, ..., 1.n kann nach jeder weiteren aufgebrachten Einzelzelle respektive nach jedem Zyklus erneut auf die dann veränderte Position abgestimmt werden.

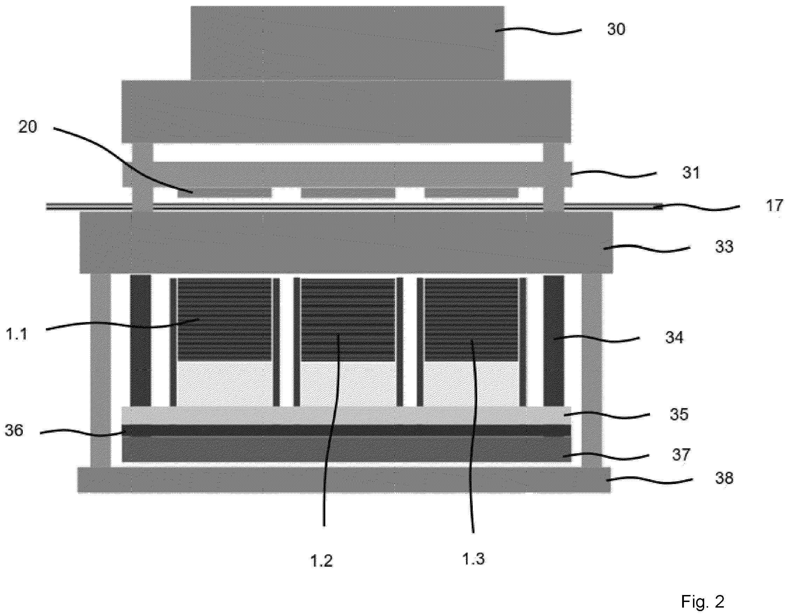

Fig. 2 zeigt eine vergrößerte schematische Darstellung der Trenneinrichtung 16 von der Seite. Ein Presskopf mit Antrieb 30 dient zum Betätigen der mehreren Trennwerkzeuge 20, die bei dem gezeigten Ausführungsbeispiel mit Stanzwerkzeugen in einer Trägerplatte 31 gebildet sind. Der Stapel 17 mit der Plattenanordnung 10 und dem Membranmaterial 18 wird auf einer Jochplatte 33 angeordnet. Unterhalb der Jochplatte 33 ist eine Matrix-Kassette 34 mit einem Hubtisch mit Abstandshalter 35 und einem Hubtisch mit Stapelschienen 36 angeordnet. Weiterhin ist ein Wechseltisch 37 vorgesehen, der oberhalb eines unteren Pressen-Jochs 38 angeordnet ist.

Die gestapelten Anordnungen 1.1, ..., 1.n sind jeweils unterhalb und gegenüberliegend den Trennwerkzeugen 20 angeordnet, so dass die beim Trennvorgang entstehenden Einzelzellen nach dem Trennen nach unten in den zugeordneten Stapel fallen kann.

In Fig. 2 ist die Anordnung der Trennwerkzeugen 20 und der gestapelten Anordnungen 1.1, ... , 1.n in einer x-Richtung erkennbar. Ergänzend kann sich die jeweilige Anordnung der Trennwerkzeuge 20 und der gestapelten Anordnungen 1.1, ..., 1.n jeweils auch quer hierzu in y-Richtung erstrecken, so dass eine jeweilige Matrixanordnung gebildet ist, was die simultane Herstellung von noch mehr Einzelzellen und gestapelten Anordnungen 1.1, ..., 1.n ermöglicht.

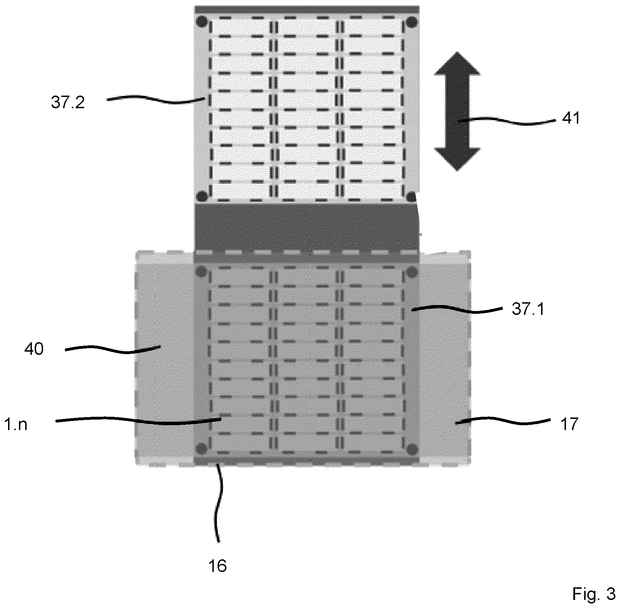

Hierzu zeigt Fig. 3 zeigt eine schematische Darstellung einer Ausführung der Trenneinrichtung 16 von oben, bei der sich die Anordnung der Trennwerkzeuge 20 und der gestapelten Anordnungen 1.1, ..., 1.n jeweils in x- und y-Richtung erstreckt.

Der Stapel 17 mit den zu trennenden ungetrennten Plattenabschnitten wird der Trenneinrichtung zugeführt. Nach dem Bearbeiten verlässt die Trenneinrichtung 20 ein Stapelabfall 40, zum Beispiel in Form von Stanzabfall.

Es sind Wechseltische 37.1, 37.2 gezeigt, die entlang einer Pfeilrichtung 41 wechselweise in den Bereich der Trenneinrichtung 16 unterhalb der Trennwerkzeuge 20 und aus diesem Bereich heraus verlagerbar sind, was die Fertigung der gestapelten Anordnungen 1.1, ..., 1.n mit hoher Rate weiter unterstützt.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Verfahren zum Herstellen einer gestapelten Anordnung von Einzelzellen für Brennstoffzellen- oder Elektrolyseur-Stapel, wobei Folgendes vorgesehen ist:
- Bereitstellen einer Plattenanordnung (10) mit einem ungetrennten Plattenabschnitt für eine Bipolarplatte einer Einzelzelle, wobei in der Plattenanordnung (10) Lagen (4, 8) wenigstens eines Plattenmaterials stoffschlüssig miteinander gefügt sind;
- Bereitstellen eines Membranmaterials (18) in einer Membran-Elektrolyt-Anordnung für eine Membran der Einzelzelle;
- Ausbilden eines Stapels (17) mit der Plattenanordnung (10) und dem Membranmaterial (18), derart, dass der ungetrennt Plattenabschnitt mit dem Membranmaterial (18) in der Membran-Elektrolyt-Anordnung flächig überlappt;
- Zuführen des Stapels (17) zu einer Trenneinrichtung (16);
- mittels Trennen des Stapels (17) in der Trenneinrichtung (16), Herstellen einer ersten Einzelzelle mit dem eine erste Bipolarplatte bildenden ungetrennten Plattenabschnitt und einem eine erste Membran-Elektrolyt-Anordnung bildenden Abschnitt des Membranmaterials (18), derart, dass für die erste Einzelzelle der ungetrennte Plattenabschnitt zusammen mit dem zugeordneten Abschnitt des Membranmaterials (18) vom Stapel (17) getrennt wird; und
- Anordnen der ersten Einzelzelle in einer ersten gestapelten Anordnung (1.1) für einen ersten Brennstoffzellen- oder Elektrolyseur-Stapel, wobei die erste Einzelzelle mittels einer von der Trenneinrichtung (16) beim Trennen des Stapels (17) beaufschlagten Auswurfbewegung in der ersten gestapelten Anordnung (1.1) angeordnet wird.

2. Verfahren nach Anspruch 1, **gekennzeichnet durch**:
- Bereitstellen der Plattenanordnung (10) mit weiteren ungetrennten Plattenabschnitten für Bipolarplatten von weiteren Einzelzellen;
- mittels Trennen des Stapels (17) in der Trenneinrichtung (16), Herstellen einer zweiten Einzelzelle mit einem eine zweite Bipolarplatte bildenden Plattenabschnitt der weiteren ungetrennten Plattenabschnitte und einem eine zweite Membran-Elektrolyt-Anordnung bildenden Abschnitt des Membranmaterials (18), derart, dass für die erste und die zweite Einzelzelle der jeweilige ungetrennte Plattenabschnitt zusammen mit dem jeweils zugeordneten Abschnitt des Membranmaterials (18) vom Stapel (17) getrennt werden; und
- Anordnen der zweiten Einzelzelle in einer getrennt von der ersten gestapelten Anordnung (1.1) gebildeten, zweiten gestapelten Anordnung (1.2) für einen zweiten Brennstoffzellen- oder Elektrolyseur-Stapel, wobei die zweite Einzelzelle mittels der von der Trenneinrichtung (16) beim Trennen des Stapels (17) beaufschlagten Auswurfbewegung in der zweiten gestapelten Anordnung (1.2) angeordnet wird.

3. Verfahren nach Anspruch 2, **dadurch gekennzeichnet, dass** die erste und die zweite Einzelzelle beim Trennen des Stapels (17) in der Trenneinrichtung (16) in einem gemeinsamen Trennarbeitsschritt hergestellt werden.

4. Verfahren nach mindestens einem der vorangehenden Ansprüche, dadurch **gekenn- zeichnet**, dass die erste und / oder die zweite Einzelzelle, infolge der beaufschlagten Auswurfbewegung, mittels einer im Wesentlichen freien Fallbewegung in die erste / zweite gestapelte Anordnung (1.1, 1.2) gelangen.

5. Verfahren nach mindestens einem der vorangehenden Ansprüche, dadurch **gekenn- zeichnet**, dass der Stapel (17) zum Trennen in der Trenneinrichtung (16) derart angeordnet wird, dass
- die erste gestapelte Anordnung (1.1) für den ersten Brennstoffzellen- oder Elektrolyseur-Stapel (17) unterhalb des die erste Bipolarplatte bildenden ungetrennten Plattenabschnitts und diesem gegenüberliegend und / oder
- die zweite gestapelte Anordnung (1.2) für einen zweiten Brennstoffzellen- oder Elektrolyseur-Stapel unterhalb des die zweite Bipolarplatte bildenden ungetrennten Plattenabschnitts und diesem gegenüberliegend angeordnet werden.

6. Verfahren nach mindestens einem der vorangehenden Ansprüche, dadurch **gekenn**- **zeichnet**, dass der Stapel (17) in der Trenneinrichtung (16) mittels wenigstens eines Trennverfahrens aus der folgenden Gruppe getrennt wird: Stanzen und Schneiden wie Laserschneiden.

7. Verfahren nach mindestens einem der vorangehenden Ansprüche, dadurch **gekenn**- **zeichnet**, dass die Plattenanordnung (10) mit dem ungetrennten Plattenabschnitt oder mit dem ungetrennten Plattenabschnitt und den weiteren ungetrennten Plattenabschnitten in einem Bandmaterial des wenigstens einen Plattenmaterials ausgebildet wird, welches im Stapel (17) mit dem Membranmaterial (18) gestapelt wird.

8. Verfahren nach mindestens einem der vorangehenden Ansprüche, dadurch **gekenn**- **zeichnet**, dass beim Bereitstellen der Plattenanordnung (10) die Lagen (4, 8) des wenigstens einen Plattenmaterials mittels wenigstens eines Fügeverfahrens aus der folgenden Gruppe stoffschlüssig miteinander gefügt werden: Kleben und Schweißen wie Elektronenstrahlschweißen oder Laserschweißen.

9. Verfahren nach mindestens einem der vorangehenden Ansprüche, dadurch **gekenn**- **zeichnet**, dass beim Bereitstellen der Plattenanordnung (10) nach dem Fügen der Lagen (4, 8) des wenigstens einen Plattenmaterials im Bereich des ungetrennten Plattenabschnitts oder des ungetrennten Plattenabschnitts und der weiteren ungetrennten Plattenabschnitte mittels Umformen jeweils eine Plattentopologie ausgebildet wird, welche jeweils wenigstens einen Arbeitsmedienzugang für die Bipolarplatte umfasst.

10. Verfahren nach Anspruch 9, **dadurch gekennzeichnet, dass** das Umformen mittels Innenhochdruck-Umformen ausgeführt wird.

11. Verfahren nach mindestens einem der vorangehenden Ansprüche, soweit auf Anspruch 2 rückbezogen, **dadurch gekennzeichnet, dass**
- beim Trennen des Stapels (17) mindestens eine weitere Einzelzelle mit einem eine weitere Bipolarplatte bildenden Plattenabschnitt der weiteren ungetrennten Plattenabschnitte und einem eine weitere Membran-Elektrolyt-Anordnung bildenden Abschnitt des Membranmaterials (18) hergestellt wird und
- die weitere Einzelzelle in einer weiteren gestapelten Anordnung (1.n) für einen getrennt von der ersten und der zweiten gestapelten Anordnung (1.1, 1.n) gebildeten, weiteren Brennstoffzellen- oder Elektrolyseur-Stapel angeordnet wird, wobei die weitere Einzelzelle mittels der von der Trenneinrichtung (16) beim Trennen des Stapels (17) beaufschlagten Auswurfbewegung in der weiteren gestapelten Anordnung (1.n) angeordnet wird.

12. Verfahren nach Anspruch 2 oder 11, **dadurch gekennzeichnet, dass** die Plattenanordnung (10) mit ungetrennten Plattenabschnitten bereitgestellt wird, von denen ungetrennte Plattenabschnitte nebeneinanderliegend sowohl in einer ersten Richtung wie auch in einer zweiten Richtung angeordnet sind, welche quer zur ersten Richtung verläuft.

13. Vorrichtung zum Herstellen einer gestapelten Anordnung von Einzelzellen für Brennstoffzellen- oder Elektrolyseur-Stapel, wobei die Vorrichtung für Folgendes eingerichtet ist:
- Bereitstellen einer Plattenanordnung (10) mit einem ungetrennten Plattenabschnitt für eine Bipolarplatte einer Einzelzelle, wobei in der Plattenanordnung (10) Lagen (4, 8) wenigstens eines Plattenmaterials stoffschlüssig miteinander gefügt sind;
- Bereitstellen eines Membranmaterials (18) in einer Membran-Elektrolyt-Anordnung für eine Membran der Einzelzelle;
- Ausbilden eines Stapels (17) mit der Plattenanordnung (10) und dem Membranmaterial (18), derart, dass der ungetrennte Plattenabschnitte mit dem Membranmaterial (18) in der Membran-Elektrolyt-Anordnung jeweils flächig überlappt;
- Zuführen des Stapels (17) zu einer Trenneinrichtung (16);
- mittels Trennen des Stapels (17) in der Trenneinrichtung (16), Herstellen einer ersten Einzelzelle mit dem eine erste Bipolarplatte bildenden ungetrennten Plattenabschnitt und einem eine erste Membran-Elektrolyt-Anordnung bildenden Abschnitt des Membranmaterials (18), derart, dass für die erste Einzelzelle der ungetrennte Plattenabschnitt zusammen mit dem zugeordneten Abschnitt des Membranmaterials (18) vom Stapel (17) getrennt wird; und
- Anordnen der ersten Einzelzelle in einer ersten gestapelten Anordnung (1.1) für einen ersten Brennstoffzellen- oder Elektrolyseur-Stapel, wobei die erste Einzelzelle mittels einer von der Trenneinrichtung (16) beim Trennen des Stapels (17) beaufschlagten Auswurfbewegung in der ersten gestapelten Anordnung (1.1) angeordnet wird.
